# EUROPEAN PATENT SPECIFICATION

(11) **EP 0 239 588 B1**
(45) Date of publication and mention of the grant of the patent: **20.01.1993**
(21) Application number: 86905646.5
(22) Date of filing: 12.09.1986
(51) Int. Cl.: B29C 67/14, E06B 3/26, B29D 31/00

(54) **STRUCTURAL MEMBER AND METHOD OF MAKING**
BAUELEMENT UND HERSTELLUNGSVERFAHREN
ORGANE STRUCTURAL ET SON PROCEDE DE FABRICATION

(30) Priority: 07.10.1985 US 785192; 07.10.1985 US 785303
(43) Date of publication of application: 07.10.1987
(73) Proprietor: OWENS-CORNING FIBERGLAS CORPORATION, Toledo, Ohio 43659 (US)
(72) Inventor: HARRIS, Ronald, Ray, Newark, OH 43055 (US); AULT, Russell, Lee, Newark, OH 43055 (US); CARTER, Neil, Anderson, Granville, OH 43023 (US)
(74) Representative: West, Alan Harry
(86) International application number: US8601874
(87) International publication number: WO8701986

(56) References cited:
- EP-A- 0 007 431
- WO-A-85/05071
- FR-A- 2 535 246
- GB-A- 930 862
- GB-A- 945 962
- GB-A- 1 275 957
- GB-A- 2 143 768
- GB-A- 2 147 328
- US-A- 2 948 649
- US-A- 3 448 489
- US-A- 3 518 157
- US-A- 3 783 066
- US-A- 3 922 425
- US-A- 3 985 896
- US-A- 4 207 129

## Description

This invention relates generally to building components, and more particularly to structural members having relatively low thermal conductivity.

U.S. Patent No. 3,518,157 describes a pultrusion process for making molded glass wool products of a non-structural nature. U.S. Patents Nos 2,948,649, 3,448,489 and 3,783,066 describes pultrusion processes for making glass fiber reinforced plastic structural members having relatively high thermal conductivity.

British Patent No. 930,862 describes building elements such as heat and sound insulating wall boards manufactured by applying hardenable binder to the surfaces only of a plurality of glass fiber bodies, assembling the bodies with their binder impregnated surfaces in contact and causing the binder to harden and bond the bodies together, and applying a surface skin to each face of the resulting structure.

British Patent Application No. 2,143,768A describes the manufacture of structural profiles as timber substitutes by sheathing a core of closely compacted, resin-bonded particulate filler with resin-bonded glass fiber and an acrylic coating.

In accordance with the present invention, there is now provided a lineal structural member comprising an elongated porous core of glass wool impregnated with a binder, the outer surface portions only of the core having been impregnated with a resin and cured and a resin casing having been applied around the resin-impregnated and cured outer surface portions of the core.

There is provided also a method of making a lineal structural member comprising feeding a shaped elongated porous binder-impregnated glass fiber core successively through a resin-impregnating die wherein resin is impregnated only into outer surface portions of the core completely around its periphery, through a curing chamber wherein the resin impregnated into the outer surface portions is cured, through a resin-encasing die wherein resin is injected under pressure to encase the resin-impregnated core, and through a curing die wherein the encasing resin is cured to form the structural member.

Various preferred features of both the structural member and its method of manufacture according to the invention, will become apparent from the following detailed description with reference to the accompanying drawings; in which:
Fig. 1 is a schematic elevational view illustrating apparatus for making structural members in accordance with the invention;
Fig. 1A is an elevational view taken generally along the line 1A-1A of Fig. 1;
Fig. 2 shows a joint between two successive fibrous glass members fed into the apparatus of Fig. 1;
Fig. 3 is a cross-sectional view taken generally along the line 3-3 of Fig. 1 and illustrating a resin-impregnated fibrous glass member in a resin-encasing die;
FIG.4 is a longitudinal sectional view taken generally along the line 4-4 of FIG. 3;
FIG. 5 is an enlarged fragmentary sectional view of a differently shaped fibrous glass structural member constructed in accordance with the invention;
FIGS. 6, 7 and 8 are fragmentary isometric views, partly in section, illustrating other shapes of fibrous glass structural members constructed in accordance with the invention;
FIG. 9 is an elevational perspective view of a double-hung window frame and sash constructed of fibrous glass structural members made in accordance with the invention;
FIG. 10 is an enlarged sectional view taken generally along the line 10-10 of FIG. 9;
FIG. 11 is a top view of a resin-impregnating die similar to that of FIG. 1, but shaped to accommodate a structural member such as shown in FIG. 14;
FIG. 12 is a sectional view taken generally along the line 12-12 of FIG. 11;
FIG. 13 is a fragmentary sectional view taken generally along the line 13-13 of FIG. 11 and showing a fragmentary representation of the structural member of FIG. 14 exiting from the die; and
FIG. 14 is a fragmentary isometric view, partially in section and enlarged from the scale of FIGS. 11-13, of a structural member constructed in accordance with the invention using the die of FIGS. 11-13.

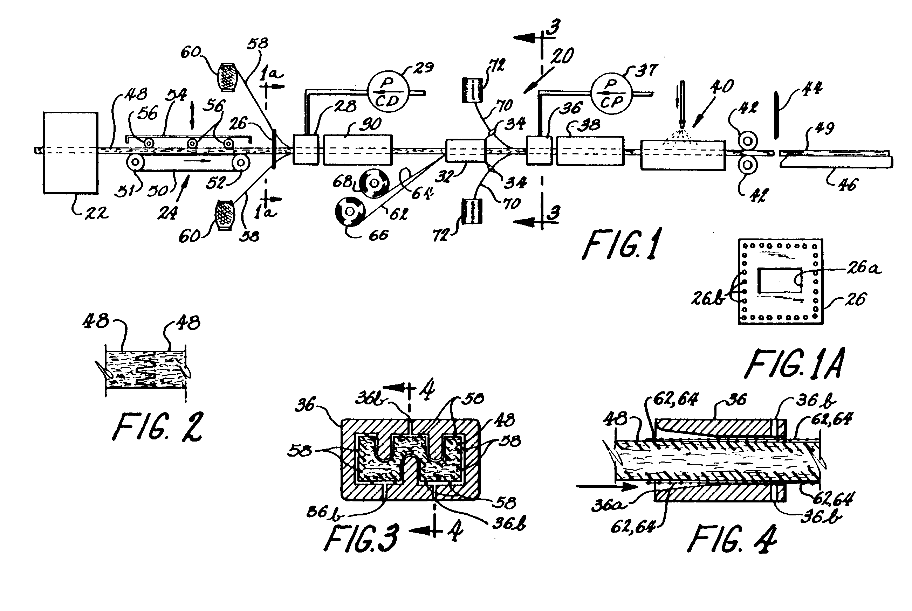

With reference to the drawings, FIG. 1 illustrates apparatus 20 for carrying out the process of the invention, the apparatus including a shaper 22, a driving belt mechanism 24, a strand guide 26, a resin-impregnating die 28 supplied with resin by a constant delivery pump 29, a resin curing box 30 supplied with hot air, a mat forming shoe 32 with attached roving guide eyes 34, a resin-encasing die 36 supplied with resin by a constant pressure pump 37, an electrically heated resin curing die 38, a cooling device 40, a pair of pulling rolls 42, a travelling cut-off saw 44, and a support table 46. It is within the scope of the invention for the shaper 22 to be off-line and for the driving belt mechanism 24 to be omitted.

Core material for a structural member of the invention is originally formed as a glass fiber board including glass wool impregnated with about 20% or less, suitably 14%, by weight of a phenolic resin binder such as phenol-urea-formaldehyde and molded and cured to a density of less than 321 kg/m³ (20 pounds per cubic foot), suitably 96 to 128 kg/m³ (6 to 8 pounds per cubic foot) and to an appropriate thickness. The board is appropriately grooved at opposite ends and slit into core pieces 48 of appropriate rectangular cross section. The shaper 22 removes portions of the core pieces 48 to provide an appropriately shaped cross section such as that shown therefor in FIG. 3. The grooved ends of successive core pieces 48 mate together as shown in FIG. 2.

The driving belt mechanism 24 includes an endless lower belt 50 driven around a pair of rolls 51 and 52 and disposed beneath core pieces 48 discharged from the shaper 22, and an upper frame 54 having a plurality of rolls 56 rotatably supported thereon and vertically adjustable therewith for applying pressure to the upper surfaces of core pieces 48.

The strand guide 26 is more clearly shown in FIG. 1A and consists of a rectangular plate having a central aperture 26a for receiving core pieces 48 and a plurality of holes 26b for guiding reinforcing strands 58, preferably of glass fiber, from supply spools such as spools 60 in FIG. 1, into peripherally encompassing longitudinally extending relationship with core pieces 48, as indicated in the die 36 in FIG. 3, before entry thereof into the impregnating die 28.

The resin-impregnating die 28, not shown in detail, has a central passageway extending therethrough, shaped as shown in FIG. 3 for the resin-encasing die 36, for receiving core pieces 48. Several passageways transverse to the central passageway meter highly filled polyester resin, formulated without release agents, from the constant delivery pump 29 to the core pieces 48 to provide a uniform thickness of resin impregnation in outer surface portions thereof all around a cross section thereof and all along the length thereof. The resin thus impregnated is cured as the core pieces 48 pass through the curing box 30 to provide an essentially non-porous, tacky, somewhat rough surface on the core pieces. The curing box 30 is provided with inlet and outlet ducts (not shown) for passage of hot air therethrough to effect the curing of the resin.

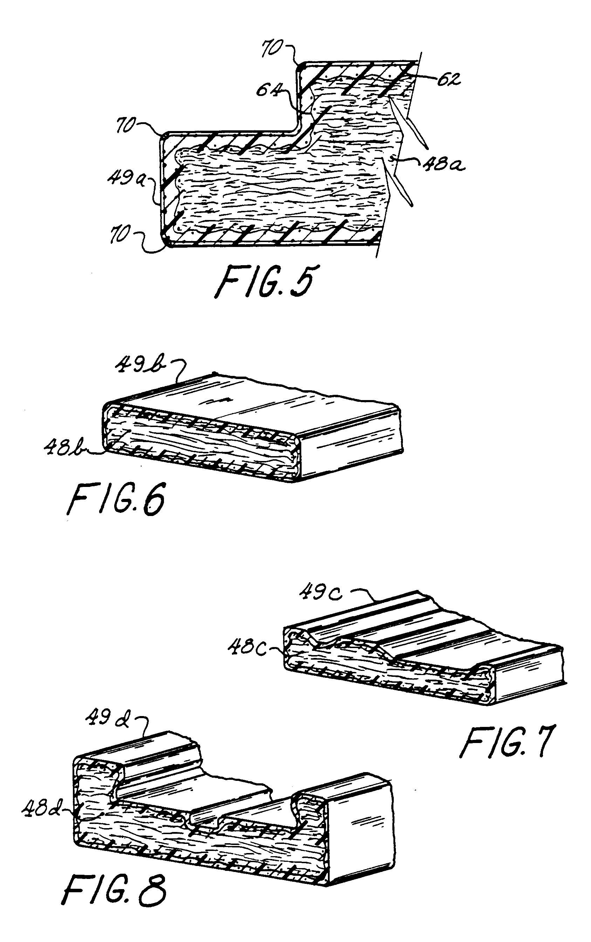

Finish mat 62, preferably a polyester veil, and reinforcing mat 64, preferably continuous glass strand mat, are pulled respectively from supply rolls 66 and 68 into the forming shoe 32 along with core pieces 48. The forming shoe 32 progressively wraps the mats 62 and 64 around the core pieces 48 with an overlap at mating opposite edges. Glass rovings 70 from supply packages such as packages 72 shown in FIG. 1 are pulled through the guide eyes 34 to extend along the core pieces 48 on the outside of the mat 62 for filling out and reinforcing outside corner portions. FIGS. 5, 6, 7 and 8 show differently shaped core pieces 48a, 48b, 48c, and 48d in composite structural members 49a, 49b, 49c, and 49d. The rovings 70 are shown schematically in FIG. 5. Alternatively, the rovings 70 may be disposed inside the mats 62 and 64.

The core pieces 48 with the strands 58, mat 64, mat 62, and rovings 70 pass through the resin-encasing die 36 wherein the mat 64, mat 62, and rovings 70 are impregnated with resin. The die 36 is best shown in FIGS. 3 and 4. A central passageway 36a extends therethrough for receiving the core pieces 48 along with the mats and rovings. The passageway 36a is tapered at its upstream end and is generally shaped correspondingly to a cross section of the core pieces 48. Several transversely extending passageways 36b are provided for supplying polyester resin from the constant pressure pump 37. The resin applied in the die 36 is cured in the curing die 38, which also determines the final size of the composite member, to provide a casing around the previously impregnated core pieces 48, the casing having a high-quality, void-free surface finish and being reinforced by the mats 62 and 64 and the rovings 70. The composite lineal structural member 49 is cooled by a spray of water in the device 40. The pulling rolls 42 are exemplary. In actual practice, upper and lower endless conveyor chains carrying movable flights with resilient pads are provided. The composite lineal structural member 49 is cut to desired length by the travelling saw 44 and deposited on the table 46.

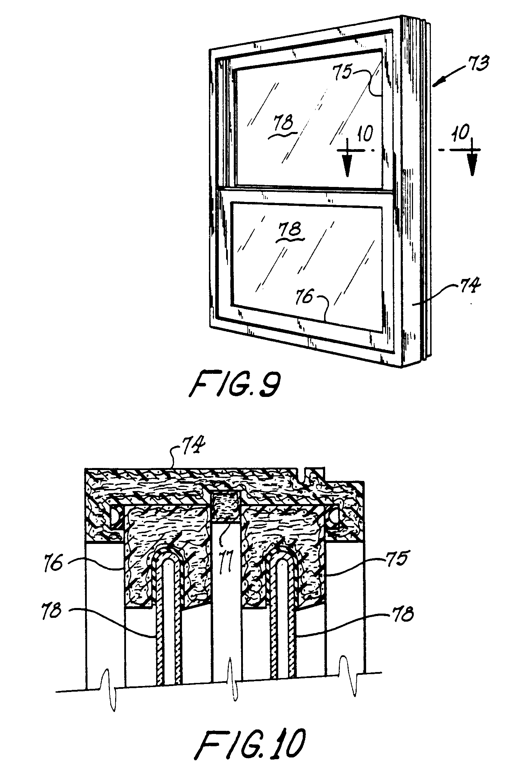

FIGS. 9 and 10 illustrate a double-hung window 73 including a frame 74 and upper and lower window sashes 75 and 76 constructed of lineal structural members made in accordance with the invention and including a spacing strip 77. Each of the frame 74 and the sashes 75 and 76 has straight top, bottom, and opposite side members. Each of the sashes 75 and 76 is shown with an insulating glass unit 78, although removable double glazing may be used instead.

The glass fiber board from which the core pieces 48 are made is generally laminar, and the resin applied in the impregnating die such as the die 28 tends to penetrate deeper into a core piece in directions parallel to the laminations and shallower in directions perpendicular to the laminations. This makes it difficult to provide a uniform thickness of resin impregnation all around the periphery of a core piece, as was previously said to be provided in the resin-impregnating die 28.

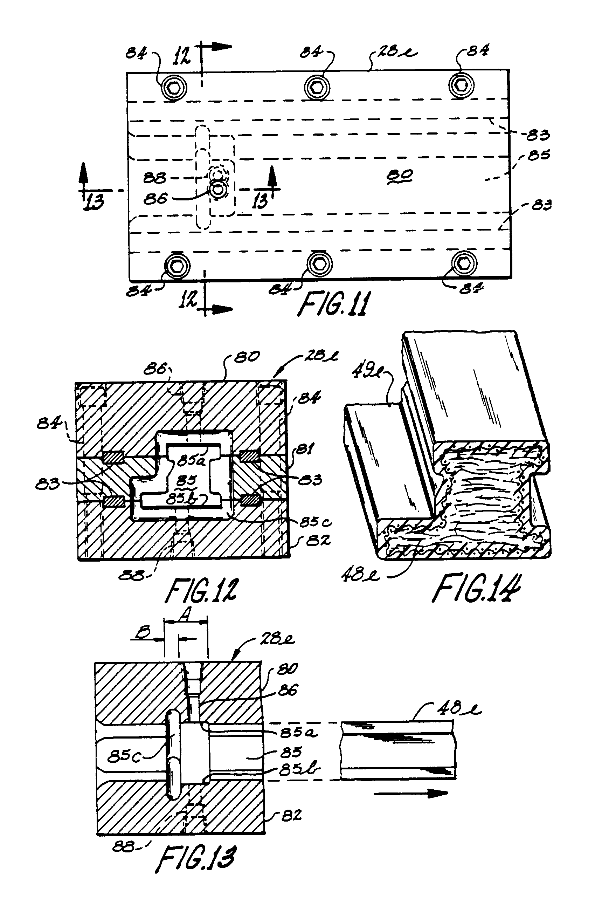

FIG. 14 shows a differently shaped core piece 48e in a composite structural member 49e, and FIGS. 11-13 show a die 28e uniquely constructed to effect the uniform thickness of resin impregnation into the core piece 48e all around its periphery. The die 28e includes three main parts, namely, an upper portion 80, an intermediate portion 81, and a lower portion 82 aligned by a plurality of keys 83 and secured together by a plurality of screws 84. The divisions between the die portions 80, 81, and 82 are omitted in FIG. 13 to reduce the number of horizontal lines. The composite die 28e is provided with a passageway 85 extending longitudinally therethrough and having a cross-sectional shape, for the greater portion of its length, corresponding to that of the core piece 48e.

The upper portion 80 of the die 28e is provided with an inlet passageway 86 for feeding resin to an upper surface of a core piece 48e passing through the passageway 85, and the lower portion 82 is provided with an inlet passageway 88 for feeding resin to a lower surface of the core piece. FIG. 13 shows a portion of a core piece which has passed through the die. The passageway 85 is enlarged in two different aspects. First, the upper die portion 80 is recessed as at 85a and the lower die portion 82 is recessed as at 85b, and secondly, the three die portions 80, 81, and 82 are grooved to provide an inner peripheral groove 85c disposed upstream of the recesses 85a and 85b and extending all around a core piece 48e passing through the die. The groove 85c acts as a reservoir for resin. Resin pumped through inlet passageway 86 flows under pressure to the groove 85c through the recess 85a and resin pumped through inlet passageway 88 flows under pressure to the groove 85c through the recess 85b even when a core piece 48e is in the passageway 85. The velocity of the core pieces 48e through the passageway 85, to the right as viewed in FIGS. 11 and 13, is maintained sufficiently high to retain resin in the groove 85c and prevent resin from flowing out the inlet end of the passageway 85 (the left end as viewed in FIGS. 11 and 13). Further, the length of the die 28e downstream of the resin inlets 86 and 88 is sufficiently great that by the time a core piece 48e emerges, the resin thereon has soaked thereinto sufficiently so as not to drip off. Thus, no drip pans need be provided to catch resin and circulate it back through the system, and the atmosphere around the apparatus 20 is less polluted with resin.

As a core piece 48e is passing through the die 28e, at any given instant it is exposed to resin on its top and bottom surfaces over a distance A indicated in FIG. 13. The side surfaces of the core piece 48e fit the passageway 85 snugly enough that at any given instant, they are exposed to resin over a lesser distance B indicated in FIG. 13, i.e., essentially only at the groove 85c. Therefore, the slower penetration of resin into the top and bottom surfaces is compensated by their larger area exposed to the resin application at any given instant, and a uniform thickness of resin impregnation all around the core piece 48e is obtained in spite of the laminar structure thereof. This is important, because the resin impregnation must result in an essentially non-porous surface to prevent flooding into the core piece by the subsequently applied encasing resin, which is applied under pressure. Flooding of the interior of the core by the encasing resin would diminish the high insulation value of the core.

Window frames and sashes made of lineal structural members constructed in accordance with the invention may be installed in houses for decreased heat loss in cold weather.

## Claims

1. A lineal structural member (49) comprising an elongated porous core (48) of glass wool impregnated with a binder, the outer surface portions only of the core having been impregnated (28) with a resin and cured and a resin casing (36,38) having been applied around the resin-impregnated and cured outer surface portions of the core.

2. A structural member as claimed in claim 1, comprising also a reinforcing mat (64) within the resin casing.

3. A structural member as claimed in claim 2, wherein the reinforcing mat is a continuous glass strand mat.

4. A structural member as claimed in any one of claims 1 to 3, comprising also a finish mat (62) in an outer surface portion of the resin casing.

5. A window (73) comprising a generally rectangular frame (74) and a generally rectangular sash (75,76) within the frame, the frame and sash each having straight top, bottom and opposed side members each of which is a lineal structural member as claimed in any one of claims 1 to 4.

6. A window sash (75,76) having straight top, bottom and opposed side members each of which is a lineal structural member as claimed in any one of claims 1 to 4.

7. A window frame (74) having straight top, bottom and opposed side members each of which is a lineal structural member as claimed in any one of claims 1 to 4.

8. A method of making a lineal structural member (49) as claimed in claim 1, comprising feeding a shaped elongated porous binder-impregnated glass fiber core (48) successively through a resin-impregnating die (28) wherein resin is impregnated only into outer surface portions of the core completely around its periphery, through a curing chamber (30) wherein the resin impregnated into the outer surface portions is cured, through a resin-encasing die (36) wherein resin is injected under pressure to encase the resin-impregnated core, and through a curing die (38) wherein the encasing resin is cured to form the structural member.

9. A method as claimed in claim 8 including the further step of cooling the structural member by spraying it with water (40).

10. A method as claimed in claim 8 or claim 9, including the step of feeding glass strands (58) longitudinally of the core at spaced points around its periphery before feeding the core through the resin-impregnating die (28), the glass strands being fed through the resin-impregnating die along with the core.

11. A method as claimed in any one of claims 8 to 10, including the step of feeding glass rovings (70) longitudinally of the resin-impregnated core at its external corner portions before feeding the core through the resin-encasing die (36), the glass rovings being fed through the resin-encasing die along with the core.

12. A method as claimed in any one of claims 8 to 11, including the step of feeding a finish mat (62) longitudinally of the resin-impregnated core and progressively wrapping it around the core before feeding the core through the resin-encasing die (36), the finish mat being fed through the resin-encasing die along with the core.

13. A method as claimed in claim 12, including feeding a reinforcing mat (64) longitudinally of the resin-impregnated core along with the finish mat (62) and progressively wrapping both mats around the core with the finish mat on the outside before feeding the core through the resin-encasing die (36), the finish mat and the reinforcing mat being fed through the resin-encasing die along with the core.

14. A method as claimed in any one of claims 8 to 11, including the step of feeding a reinforcing mat (64) longitudinally of the resin-impregnated core and progressively wrapping it around the core before feeding the core through the resin-encasing die (36), the reinforcing mat being fed through the resin-encasing die along with the core.

## Patentansprüche

1. Geradliniges Bauelement (49) mit einem langgestreckten, porösen Kern (48) aus Glaswolle, die mit einem Bindemittel imprägniert ist, wobei nur die Außenflächenabschnitte (28) des Kerns mit einem Harz imprägniert und ausgehärtet sind und einer Harzummantelung (36,38), die um die harzimprägnierten und ausgehärteten Außenflächenabschnitte des Kerns herum angebracht ist.

2. Bauelement nach Anspruch 1,mit einer Verstärkungsmatte (64) innerhalb der Harzummantelung.

3. Bauelement nach Anspruch 2, in dem die Verstärkungsmatte eine ununterbrochene Glasfasermatte ist.

4. Bauelement nach einem der Ansprüche 1 bis 3, mit einer Abschlußmatte (62) in einem Außenflächenabschnitt der Harzummantelung.

5. Fenster (73), mit einem im wesentlichen rechtwinkligen Rahmen (74) und einem im wesentlichen rechtwinkligen Flügelrahmen (75,76) innerhalb des Rahmens, wobei der Rahmen und der Flügelrahmen jeweils gerade obere, untere und gegenüberliegende Seitenteile aufweist, von denen jedes ein geradliniges Bauelement nach einem der Ansprüche 1 bis 4 ist.

6. Flügelrahmen (75,76) mit geraden oberen, unteren und gegenüberliegenden Seitenteilen, von denen jedes ein geradliniges Bauelement nach einem der Ansprüche 1 bis 4 ist.

7. Fensterrahmen (74) mit geraden oberen, unteren und gegenüberliegenden Seitenteilen, von denen jedes ein geradliniges Bauelement nach einem der Ansprüche 1 bis 4 ist.

8. Verfahren zur Herstellung eines geradlinigen Bauelements (49) nach Anspruch 1, mit schrittweisem Hindurchführen eines geformten, langgestreckten, porösen und mit einem Bindemittel imprägnierten Glasfaserkerns durch eine Harzimprägnierungsdüse (28), wobei das Harz nur in die Außenflächenabschnitte des Kerns vollständig um seinen Umfang herum hineinimprägniert wird, durch eine Aushärtekammer (30), wobei das in die Außenflächenabschnitte imprägnierte Harz ausgehärtet wird, durch eine Harzummantelungsdüse (36), wobei Harz mit Druck eingespritzt wird, um den harzimprägnierten Kern zu ummanteln und durch eine Aushärtedüse (38), wobei das Mantelharz ausgehärtet wird, um das Bauelement zu formen.

9. Verfahren nach Anspruch 8, mit dem weiteren Verfahrensschritt der Kühlung des Bauelements durch Besprühen mit Wasser (40).

10. Verfahren nach Anspruch 8 oder 9, mit dem Verfahrensschritt der Zuführung von Glasfasern (58) in Längsrichtung des Kerns an beabstandeten Punkten um seinen Umfang herum vor dem Hindurchzuführen des Kerns durch die Harzimprägnierungsdüse (28), wobei die Glasfasern längs des Kerns durch die Harzimprägnierungsdüse hindurchgeführt werden.

11. Verfahrensschritt nach einem der Ansprüche 8 bis 10, mit dem Verfahrensschritt der Zuführung von Glasrovingen (70) in Längsrichtung des harzimprägnierten Kerns an seinen Außenkantenabschnitten vor dem Hindurchführen des Kerns durch die Harzummantelungsdüse (36), wobei die Glasrovinge längs des Kerns durch die Harzummantelungsdüse hindurchgeführt werden.

12. Verfahren nach einem der Ansprüche 8 bis 11, mit dem Verfahrensschritt der Zuführung einer Abschlußmatte (62) in Längsrichtung des harzimprägnierten Kerns und des fortschreitenden Umwickelns des Kerns mit der Abschlußmatte vor Hindurchführen des Kerns durch die Harzummantelungsdüse (36), wobei die Abschlußmatte längs des Kerns durch die Harzummantelungsdüse hindurchgeführt wird.

13. Verfahren nach Anspruch 12 mit Zuführung einer Verstärkungmatte (64) in Längsrichtung des harzimprägnierten Kerns längs der Abschlußmatte (62) und fortschreitendem Wickeln beider Matten mit der Abschlußmatte an der Außenseite vor Hindurchführen des Kerns durch die Harzummantelungsdüse (36), wobei die Abschlußmatte und die Verstärkungsmatte längs des Kerns durch die Harzummantelungdüse hindurchgeführt werden.

14. Verfahren nach einem der Ansprüche 8 bis 11, mit dem Verfahrensschritt der Zuführung einer Verstärkungsmatte (64) in Längsrichtung des harzimprägnierten Kerns und des fortschreitenden Umwickelns des Kerns mit der Verstärkungsmatte vor Hindurchführen des Kerns durch die Harzummantelungsdüse (36), wobei die Verstärkungsmatte längs des Kerns durch die Harzummantelungsdüse hindurchgeführt wird.

## Revendications

1. Elément de structure linéaire (49) comportant un noyau poreux allongé (48) en laine de verre imprégnée d'un liant, seules les parties de surface extérieures du noyau ayant été imprégnées (28) avec un résine et durcies, tandis qu'un enrobage en résine (36, 38) a été appliqué autour des parties de surface extérieures du noyau imprégnées de résine et durcies.

2. Elément de structure tel que défini dans la revendication 1, comportant également un mat de renforcement (64) à l'intérieur de l'enrobage en résine.

3. Elément de structure tel que défini dans la revendication 2, dans lequel le mat de renforcement est un mat à fils de base de verre continus.

4. Elément de structure tel que défini dans l'une quelconque des revendications 1 à 3, comportant également un mat d'apprêt (62) dans une partie de surface extérieure de l'enrobage en résine.

5. Fenêtre (73) comportant un châssis dormant sensiblement rectangulaire (74) et un châssis mobile sensiblement rectangulaire (75, 76) placé à l'intérieur du châssis dormant, le châssis dormant et le châssis mobile possédant respectivement des éléments supérieurs, inférieurs et latéraux opposés, rectilignes dont chacun est un élément de structure linéaire tel que défini dans l'une quelconque des revendications 1 à 4.

6. Châssis mobile de fenêtre (75, 76) comportant des éléments supérieur, inférieur et latéraux opposés, rectilignes dont chacun est un élément de structure linéaire tel que défini dans l'une quelconque des revendications 1 à 4.

7. Châssis dormant de fenêtre (74) comportant des éléments supérieur, inférieur et latéraux opposés, rectilignes dont chacun est un élément de structure linéaire tel que défini dans l'une quelconque des revendications 1 à 4.

8. Procédé pour fabriquer un élément de structure linéaire (49) tel que défini dans la revendication 1, consistant à faire passer un noyau poreux allongé, profilé (48) en fibres de verre imprégnées d'un liant successivement à travers une matrice d'imprégnation de résine (28) dans laquelle une résine est imprégnée uniquement dans des parties de surface extérieures du noyau sur la totalité de sa périphérie, à travers une chambre de durcissement (30) dans laquelle la résine imprégnée dans les parties de surface extérieures est durcie, à travers une matrice d'enrobage de résine (36) dans laquelle une résine est injectée sous pression pour enrober le noyau imprégné de résine, et à travers une matrice de durcissement (38) dans laquelle la résine d'enrobage est durcie pour former l'élément de structure.

9. Procédé tel que défini dans la revendication 8, comportant l'étape supplémentaire qui consiste à refroidir l'élément de structure en l'aspergeant d'eau (40).

10. Procédé tel que défini dans la revendication 8 ou la revendication 9, comportant l'étape qui consiste à introduire des fils de base de verre (58) longitudinalement par rapport au noyau au niveau de points espacés autour de sa périphérie, avant de faire passer le noyau à travers la matrice d'imprégnation de résine (28), les fils de base de verre étant amenés à passer à travers la matrice d'imprégnation de résine en même temps que le noyau.

11. Procédé tel que défini dans l'une quelconque des revendications 8 à 10, comportant l'étape qui consiste à introduire des stratifils de verre (70) longitudinalement par rapport au noyau imprégné de résine, au niveau de ses parties d'angle extérieures, avant de faire passer le noyau à travers la matrice d'enrobage de résine (36), les stratifils de verre étant amenés à passer à travers la matrice d'enrobage de résine en même temps que le noyau.

12. Procédé tel que défini dans l'une quelconque des revendications 8 à 11, comportant l'étape qui consiste à introduire un mat d'apprêt (62) longitudinalement par rapport au noyau imprégné de résine et à l'enrouler progressivement autour du noyau, avant de faire passer le noyau à travers la matrice d'enrobage de résine (36), le mat d'apprêt étant amené à passer à travers la matrice d'enrobage de résine en même temps que le noyau.

13. Procédé tel que défini dans la revendication 12, consistant à introduire un mat de renforcement (64) longitudinalement par rapport au noyau imprégné de résine en même temps que le mat d'apprêt (62) et à enrouler progressivement les deux mats autour du noyau, le mat d'apprêt étant disposé sur la face extérieure, avant de faire passer le noyau à travers la matrice d'enrobage de résine (36), le mat d'apprêt et le mat de renforcement étant amenés à passer à travers la matrice d'enrobage de résine en même temps que le noyau.

14. Procédé tel que défini dans l'une quelconque des revendications 8 à 11, comportant l'étape qui consiste à introduire un mat de renforcement (64) longitudinalement par rapport au noyau imprégné de résine et à l'enrouler progressivement autour du noyau, avant de faire passer le noyau à travers la matrice d'enrobage de résine (36), le mat de renforcement étant amené à passer à travers la matrice d'enrobage de résine en même temps que le noyau.
